# EUROPEAN PATENT APPLICATION

(11) **EP 4 683 295 A1**
(43) Date of publication of application: **21.01.2026**
(21) Application number: 25189827.6
(22) Date of filing: 16.07.2025
(51) Int. Cl.: H04L 47/62, H04L 47/625, H04L 49/201

(54) **SCALABLE METHOD OF INTERNAL PACKET GENERATION**

(30) Priority: 17.07.2024 US 202418775387
(71) Applicant: Avago Technologies International Sales Pte. Limited, Singapore 768923 (SG)
(72) Inventor: Bansal, Ankit, Irvine, 92618 (US); LakshmyGopalakrishnan, Manoj, Irvine, 92618 (US); Durve, Rahul, Irvine, 92618 (US); Tabatabaee, Vahid, Irvine, 92618 (US)
(74) Representative: Dilg, Haeusler, Schindelmann Patentanwaltsgesellschaft mbH

(57) **Abstract**

An apparatus for scalable internal packet generation is provided. The apparatus includes one or more ingress points (IPₐ - IPₙ), one or more internal packet sources configured to generate one or more second packets, and a memory management unit (110). The memory management unit (110) includes an internal queueing engine and merge function logic (210). The internal queueing engine is configured to obtain the one or more second packets from one or more internal packet sources and enqueue each of the one or more second packets in a respective first queue of the one or more first queues. Arbitration logic (315) is configured to determine an order in which the one or more second packets are dequeued from the one or more first queues. Merge function logic (210) is configured to combine the one or more second packets from the internal queueing engine with the one or more first packets.

## Description

### COPYRIGHT STATEMENT

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### FIELD

The present disclosure relates, in general, to methods, systems, and apparatuses for internal packet generation in network switches.

### BACKGROUND

Various sources of internally generated packets, in addition to externally arriving packets, can be enqueued and routed according to some known queueing schemes. The average traffic rate of internally generated packets is typically much lower than their instantaneous bandwidth, which is on the same order as the switch bandwidth. Brute force methods of enqueueing packets results in doubling of the enqueue bandwidth, which is expensive in terms of both area and power.

Accordingly, a scalable internal packet generation scheme is provided.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1 is a schematic block diagram of a network switch, in accordance with various embodiments;
Fig. 2 is a schematic block diagram of a traffic manager of a network switch, in accordance with various embodiments;
Fig. 3 is a schematic block diagram of an architecture for an internal packet queueing engine, in accordance with various embodiments; and
Fig. 4 is a hardware block diagram of a computer system for a network switch with internal packet queueing engine, in accordance with various embodiments.

### DETAILED DESCRIPTION OF EMBODIMENTS

Various embodiments set forth a framework for enqueueing and internally generated packets.

In some embodiments, an apparatus for scalable internal packet generation is provided. The apparatus includes one or more ingress points configured to receive one or more first packets from one or more external sources, one or more internal packet sources configured to generate one or more second packets, and a memory management unit. The memory management unit includes an internal queueing engine coupled to the one or more internal packet sources, and merge function logic. The internal queueing engine includes one or more first queues, wherein the internal queueing engine is configured to obtain the one or more second packets from the one or more internal packet sources and enqueue each of the one or more second packets in a respective first queue of the one or more first queues, and arbitration logic configured to determine an order in which the one or more second packets are dequeued from the one or more first queues based, at least in part, on an arbitration scheme. The merge function logic may be configured to combine the one or more second packets from the internal queueing engine with the one or more first packets.

In further embodiments, a network device having an internal packet queueing engine is provided. The network device includes one or more ingress points configured to receive one or more external packets from one or more external sources, one or more internal packet sources configured to generate one or more internally generated packets, and a memory management unit. The memory management unit includes a traffic manager configured to receive one or more external packets and the one or more internally generated packets. The traffic manager includes an internal queueing engine coupled to the one or more internal packet sources, and merge function logic. The internal queueing engine includes one or more internal packet queues, wherein the internal queueing engine is configured to obtain the one or more internally generated packets from the one or more internal packet sources and enqueue each of the one or more internally generated packets in a respective internal packet queue of the one or more internal packet queues, and arbitration logic configured to determine an order in which the one or more internally generated packets are dequeued from the one or more internal packet queues based, at least in part, on an arbitration scheme. The merge function logic is configured to combine the internally generated packets from the internal queueing engine with the external packets.

In further embodiments, a memory management unit for scalable internal packet generation is provided. The memory management unit includes a traffic manager configured to receive one or more external packets and one or more internally generated packets. The traffic manager includes an internal queueing engine coupled to one or more internal packet sources, and merge function logic. The internal queueing engine includes one or more internal packet queues, wherein the internal queueing engine is configured to obtain the one or more internally generated packets from the one or more internal packet sources and enqueue each of the one or more internally generated packets in a respective internal packet queue of the one or more internal packet queues, and arbitration logic configured to determine an order in which the one or more internally generated packets are dequeued from the one or more internal packet queues based, at least in part, on an arbitration scheme. The merge function logic is configured to combine the internally generated packets from the internal queueing engine with the external packets received from the one or more external source.

In the following description, for the purposes of explanation, numerous details are set forth to provide a thorough understanding of the described embodiments. It will be apparent to one skilled in the art, however, that other embodiments may be practiced without some of these details. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

When an element is referred to herein as being "connected" or "coupled" to another element (which includes mechanically, electrically, or communicatively connecting or coupling), it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

The bandwidth of a network switch is defined by the amount of externally arriving traffic it is able to switch to a respective output. In addition to switching external traffic, the network switch also enqueues and routes some internally generated traffic (e.g., traffic generated by or within the network switch). Some examples of different packet types are replicated multicast packets (also referred to as multicast replication packets), notification packets (e.g., detecting drops or congestion to support higher layer end-to-end congestion management protocols), and network instrumentation packets. These internally generated packets usually have a very low average rate, but can be generated in a bursty manner at almost full device bandwidth.

If queueing logic tries to provide full enqueue bandwidth for both the externally arriving traffic and instantaneous internally generated traffic, the solution becomes very expensive in terms of area and power. Thus, a scalable internal packet generation scheme is provided. Specifically, a network switch comprising an internal queueing engine (IQE) and arbitration logic is set forth below. By taking advantage of the characteristics of internally generated packets, an IQE may be utilized to enqueue the internally generated packets to the final output queues. For example, the IQE may be configured to provide a burst absorption point to group traffic into one or more IQE queues, and arbitrate the different types of traffic, and enqueue rate limiting of the internally generated traffic.

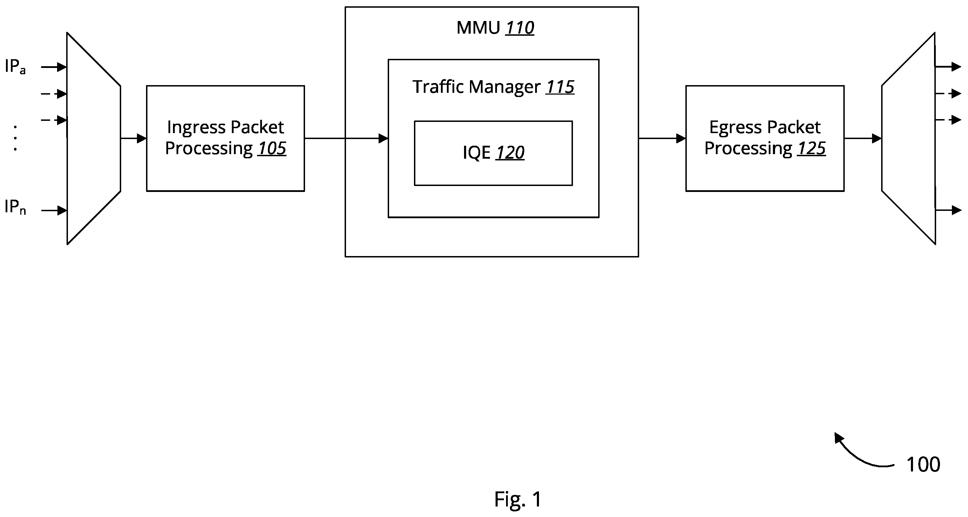

Fig. 1 is a schematic block diagram of a network switch 100, in accordance with various embodiments. The network switch 100 (referred to hereinafter simply as "switch") includes one or more ingress points IPₐ - IPₙ, ingress packet processing 105, memory management unit (MMU) 110, traffic manager 115, IQE 120, and egress packet processing 125, which may output traffic to one or more egress points. It should be noted that the various elements of the switch 100 are schematically illustrated in Fig. 1, and that modifications to the various components and other arrangements of the switch 100 may be possible and in accordance with the various embodiments.

In various embodiments, the switch 100 is a network device configured to receive and forward packets to one or more respective destination nodes. In other embodiments, a different network device may be utilized, such as a router, hub, gateway (e.g., a residential gateway (RG)), or access point (AP), configured to provide switching functionality. Thus, a network device, as used herein, may refer to a device on a computer network through which communication between devices (e.g., a host device and a destination device) is facilitated. While "switch" and "switching" are used herein in reference to packet switching functionality, it is to be understood that the terms "switch" and "switching" may, in various embodiments, further include "routers" and "routing" functionality. As previously described, switching may refer generally to the process of receiving packets and forwarding those packets to a respective destination. For example, a network switch may forward traffic based on a layer 2 address (such as a media access controller (MAC) address). A router may, in various examples, function as a network switch. Furthermore, the router may route packets based on a layer 3 address (e.g., an internet protocol (IP) address), and according to a routing table. Moreover, while various examples refer to packets, it should be understood that in other embodiments, other types of protocol data units (PDU) may be utilized, such as, without limitation, cells, frames, datagrams, bridge PDUs, MAC PDUs, segments, bits, symbols, etc.

In various examples, the switch 100 may include one or more ingress points IPₐ - IPₙ, where IPₐ is a first ingress point, and IPₙ is the *n*-th ingress point (where n is an integer) of the switch 100. An ingress point, as used herein, refers to a location where external data (e.g., external packets) enter a network device, such as the switch 100. In some examples, an ingress point may be associated with a respective port of the switch. In some examples, each ingress point may further be associated (e.g., mapped) to a respective MAC address (e.g., a respective device having a respective MAC address) from which an external packet originates. The switch 100 may similarly include one or more egress points EPₐ - EPₙ, where EPₐ is the first egress point and EPₙ is the *n*-th egress point. An egress point, as used herein, refers to a location where data exits a network device, such as switch 100. Like the ingress point, in some examples, the egress point may be associated with a respective port of the switch. In some examples, each ingress point / egress point may share a respective port of the switch. For example, in some embodiments, a first ingress point IPₐ and first egress point EPₐ may share the same respective port of the switch 100, and so on through the n-th ingress point IPₙ and n-th egress point EPₙ.

In various examples, the switch 100 may include one or more processors, DSP, application specific IC (ASIC), FPGA or other programmable logic, or other processing circuit configured to process and implement packet switching functions, such as the MMU 105, according to logic such as ingress packet processing 105, traffic manager 115, IQE 120, and/or egress packet processing 125.

Traffic may be received by the switch 100 via the one or more ingress points IPₐ - IPₙ. In some examples, traffic received at the one or more ingress points IPₐ - IPₙ may be combined into a common data stream for processing via ingress packet processing 105 and/or processing by the MMU 110. For example, the MMU 110 may process and store the received traffic in memory (external or internal), such as a buffer, and further retrieve data stored in memory to be transmitted. Ingress packet processing 105 may be configured to process the ingress traffic for further processing by the MMU. Thus, in various examples, the ingress packet processing 105 may include logic configured to process traffic received from the one or more ingress points IPₐ - IPₙ.

Logic, as used herein, may be implemented in hardware, software, or a combination of hardware and software (including firmware). Suitable hardware may include one or more processors, digital signal processors (DSP), a custom integrated circuit (IC), programmable logic (such as a field-programmable gate array (FPGA), and/or discrete logic).

Accordingly, in various examples, the ingress packet processing 105 may be implemented as software executed on the hardware of the switch 100, such a processor, DSP, application-specific IC (ASIC), FPGA, or in some further examples, by the MMU 110. In various embodiments, ingress packet processing 105 may include processing of the packet for later transmission. For example, ingress packet processing 105 may include determining an egress point EPₐ - EPₙ, or corresponding port of the switch 100, that the packet should be sent through. This may include parsing header information to determine a MAC address (or other address, such as an IP address), and determining a respective port through which the data is to be transmitted. In some examples, determining the respective port through which the data is to be transmitted includes looking up address information (e.g., MAC address, IP address, etc.) in a switching and/or routing table.

In some further examples, ingress packet processing 105 may further include reading and/or modifying the packet, classifying packet, changing packet behavior, modifying or adding header information (e.g., packet header, frame header, etc.), encapsulating a packet for transmission, replicating a packet, changing packet type, storing the packet in a buffer, or other modification of the packet.

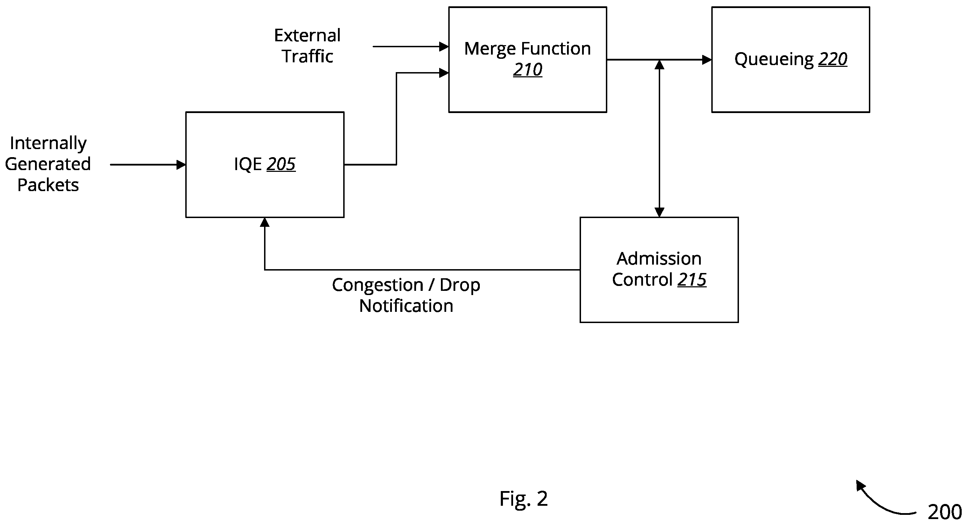

In various examples, the received, ingress packet may further be processed for storage in memory by MMU 110. Thus, processed ingress packets output by ingress packet processing 105 may be obtained by the MMU 110 for further processing. In various embodiments, the MMU 110 includes a traffic manager 115, which further includes IQE 120. As previously described, the MMU 110 may include hardware such as a processor or other circuitry that is configured to handle memory storage operations (such as access, read, and/or write operations to memory), manage an ingress data buffer, egress data buffer, admission control, queueing, and scheduling, as described in greater detail below with respect to Fig. 2 with respect to the traffic manager 115.

The traffic manager 115 may include logic within the MMU 110 that is configured to handle memory access and storage of ingress traffic, storage of data within a buffer including buffer access control, enqueueing of received packet data into respective logical queues, and dequeuing of packet data, among other features. Accordingly, the traffic manager 115 may serve various functions for managing ingress data, and controlling how the data is stored / retrieved. In various embodiments, the traffic manager 115 may include respective logic for handling the packets received by the switch 100. For example, in some embodiments, the traffic manager 115 may include IQE 120, merge function logic, admission control logic, queueing logic, scheduling logic, etc. The traffic manager 115 may further include ingress and/or egress buffers for storing packets.

In various embodiments, the IQE 120 is logic configured to process internally generated packets. For example, in various embodiments, the IQE 120 may provide a burst absorption point at which internally generated packets (or bursts of internally generated packets) can be received, and stored in a respective IQE buffer (referred to interchangeably as "IQE queues"). The IQE 120 may, accordingly, sort the internally generated packets into the respective queues for storage. The IQE 120 may further arbitrate the internally generated packets stored in the IQE queues for output. Arbitration of the internally generated packets may include determining an order of packets to be output according to arbitration logic. In some examples, packets may be arbitrated according to a type of packet and/or a traffic class.

A traffic class, as used herein, may refer to categories of traffic by which traffic is classified, according to various parameters or characteristics of such traffic. For example, a packet (such as an internally generated packet) may belong to a traffic class such as, without limitation, traffic generated by network instrumentation (e.g., network instrumentation traffic / packets, telemetry traffic / packets, etc.), multicast traffic (e.g., multicast replication traffic / packets), notification traffic (e.g., notification traffic / packets, such as congestion notifications, etc.), control plane traffic, management traffic, address resolution protocol (ARP) traffic, virtual local area network (VLAN) traffic, switch fabric traffic, quality of service (QoS) traffic, etc. Thus, in some examples, traffic classes may be defined based on source address (e.g., MAC, IP, etc.), destination address, source application or originating network instrumentation, a priority assigned to traffic (e.g., high-priority traffic, real-time traffic, etc.), or other such classifications. In some examples, traffic class may be determined based on a traffic classification identifier (ID).

Accordingly, the IQE data may be processed and sorted into an appropriate IQE queue based on a traffic class. In some further examples, the internally generated packets may be enqueued into a respective IQE queue based on the characteristics of the packet. Characteristics of the packet may, in some examples, include determining a packet type (e.g., replicated multicast packets, notification packets, network instrumentation packets, spanning tree protocol (STP) packets, ARP packets, link layer discovery protocol (LLDP) packets, internet control message protocol (ICMP) packets, simple network management protocol (SNMP) packets, etc.), packet size, packet priority, or the payload of a packet (e.g., real-time data or other low-latency data).

In some examples, an IQE queue for latency sensitive protocol messages may be assigned a higher priority queue. For example, in some embodiments, instrumentation applications or proprietary end-to-end mechanisms may be more latency sensitive. In further examples, control messages and congestion control protocol packets may similarly have a higher priority based on response time expectations. Accordingly, corresponding internally generated packet types may be assigned to a higher priority. Conversely, in some examples, packets associated with telemetry applications, in-band telemetry, mirror on drop packets, etc., may be assigned to a lower priority queue.

Accordingly, dequeuing refers to the process of removing a packet that was stored in the respective queue (or buffer) for transmission by the switch to a destination (via a respective egress point / port). Dequeuing further ensures that packets are transmitted in the correct order, for example, as described above.

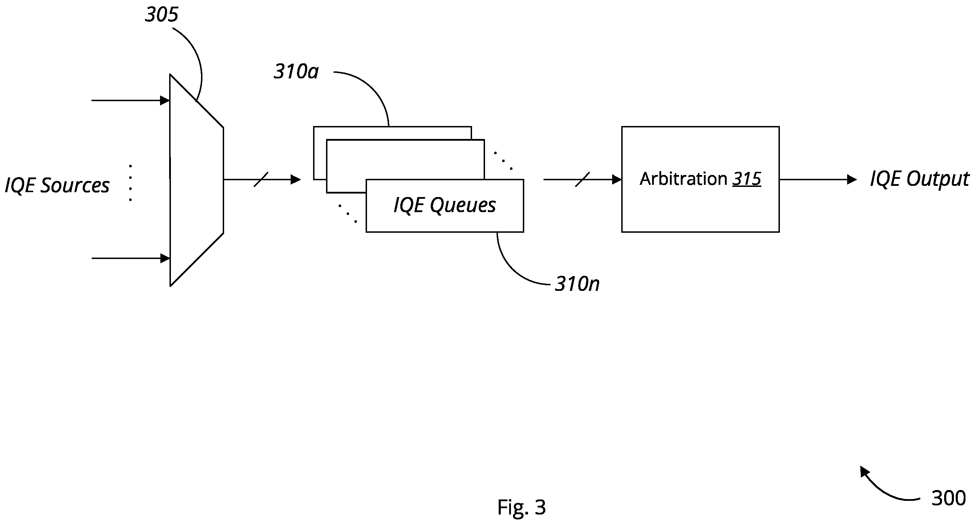

The IQE 120 may further be configured to rate limit (e.g., limit the data rate) at which the enqueued internally generated packets are dequeued and output by the IQE 120. For example, IQE 120 may be configured to control a rate at which internally generated packets are output to the merge function logic of the traffic manager 115 based, at least part, on the amount of ingress packets received by the switch 100. In further examples, the rate of the packets output by IQE 120 may be determined based, at least in part, on a bandwidth of the switch 100 (e.g., instantaneous data rate, average data rate, etc.). Moreover, the order in which the one or more IQE queues are dequeued may be controlled by the IQE 120. For example, in some embodiments, dequeuing of the one or more IQE queues may occur according to an arbitration scheme. Details of the IQE 120 are set forth in greater detail below with respect to Fig. 3.

Packets may then be retrieved from storage by the MMU 110 (e.g., traffic manager 115) and placed in an egress buffer for further processing via egress packet processing 125, and output by switch 100. Like ingress packet processing 105, egress packet processing 125 may include logic for reading and/or modifying the packet, classifying packet, changing packet behavior, modifying or adding header information (e.g., packet header, frame header, etc.), encapsulating a packet for transmission, replicating a packet, changing packet type, storing the packet in a buffer, or other modification of the packet for downstream output.

Fig. 2 is a schematic block diagram of an architecture for a traffic manager 200 of an MMU, according to various embodiments. The traffic manager 200 includes IQE 205, merge function logic 210, admission control logic 215, and queueing logic 220. It should be noted that the various elements of the traffic manager 200 are schematically illustrated in Fig. 2, and that modifications to the various components and other arrangements of the traffic manager 200 may be possible and in accordance with the various embodiments.

In various embodiments, the traffic manager 200 may be logic executed, for example, by an MMU of the switch, such as MMU 110 of switch 100. The traffic manager 200 may include further logic blocks, such as IQE 205, merge function logic 210, admission control logic 215, and queueing logic 220. As previously described, IQE 205 may be configured to manage internally generated packets, and output the internally generated packets for queueing by the traffic manager.

Specifically, merge function logic 210 may be configured to combine (or merge) externally generated packets (such as traffic received at ingress points IPₐ - IPₙ) and internally generated packets from IQE 205, into the same stream of data. Accordingly, in some examples, the merge function logic 210 may be configured to receive a stream of externally generated packets and the internally generated packets, and combines the externally generated packets and internally generated packets into the same stream. In some examples, the merge function 210 may combine the external packets and internally generated packets via multiplexer (e.g., time-division multiplexing (TDM), space-division multiplexing (SDM), etc.). In some examples, the internally generated packets may be inserted into the stream of externally generated packets. Accordingly, the output of the merge function may then be placed into a buffer (such as a packet buffer or ingress buffer) for further processing by the traffic manager 200 / admission control logic 215.

Admission control logic 215 may be configured to determine whether a packet should be allowed into the packet buffer (or discarded) based on factors such as buffer fullness (e.g., how full the egress packet buffer is), and sharing of ports and/or queues (e.g., egress queues). Accordingly, the admission control logic 215 may allow packets to be placed into the buffer.

Data allowed by admission control logic 215 may then be enqueued via queueing logic 220. Queueing logic 220 may be configured to enqueue data in the packet buffer into one or more output queues (also referred to as "logical queues"). For example, in some embodiments, packets in the packet buffer may be linked together into output queues of a given port. For example, each port (or respective egress point) may have one or more logical queues. Packets may be enqueued into a respective queue of the one or more logical queues by the queueing logic 220. Queueing logic 220 may further be configured to dequeue packets from the respective one or more logical queues based on an arbitration scheme, such as, without limitation, strict priority, round robin (including weighted round robin), etc. Accordingly, in various examples, the queueing logic 220 may be configured to enqueue packets from the packet buffer into respective logical queues, and dequeue packets from the one or more logical queues for output. Logical queues, as used herein, refers to queues that are categorized based on a logical properties, such as priority, order of arrival, address (or range of addresses), multicast or unicast requirements, destination or source, etc.

Fig. 3 is a schematic block diagram of an architecture for an IQE 300, in accordance with various embodiments. The IQE 300 includes multiplexer 305, one or more IQE queues 310a - 310n, and arbitration logic 315. It should be noted that the various elements of the IQE 300 are schematically illustrated in Fig. 3, and that modifications to the various components and other arrangements of the IQE 300 may be possible and in accordance with the various embodiments.

The switch (such as switch 100) may be configured such that all sources of internally generated packets (also referred to as an "internal packet source") are input at maximum capacity to the IQE 300. For example, the internally generated packets received via the IQE sources may be coupled to the multiplexer 305, which may then output the packets to a respective IQE queue of the one or more IQE queues 310a - 310n for storage. Specifically, the multiplexer may include a first number of inputs, which each respective input being coupled to a respective internal packet source. The multiplexer may then include a second number of outputs, with each output being coupled to a respective IQE queue. Internal packet sources, as used herein, refers to the sources of the internally generated packets (e.g., components or processes which generate the internally generated packets). For example, internal packet sources may include, without limitation, control plane, management plane, switch fabric, protocol handlers, among other components of a switch 100.

Accordingly, the internally generated packets of the IQE may be processed and sorted into an appropriate IQE queue. An IQE queue, as used herein, may refer to a queue for storing internally generated packets in the IQE (e.g., an "internal packet queue"). In some examples, the internally generated packets may be enqueued into a respective IQE queue based on the characteristics of the packet (e.g., the traffic class to which the packet belongs). Characteristics of the packet may, in some examples, include determining a packet type (e.g., replicated multicast packets, notification packets, and network instrumentation packets), packet size, packet priority, or the payload of a packet (e.g., real-time data or other low-latency data).

In some examples, an IQE queue for latency sensitive protocol messages may be assigned a higher priority queue. For example, in some embodiments, instrumentation applications or proprietary end-to-end mechanisms may be more latency sensitive. In further examples, control messages and congestion control protocol packets may similarly have a higher priority based on response time expectations. Accordingly, corresponding internally generated packet types may be assigned to a higher priority. Conversely, in some examples, packets associated with telemetry applications, in-band telemetry, mirror on drop packets, etc., may be assigned to a lower priority queue.

Thus, in various embodiments, the switch, such as switch 100 of Fig. 1, may be configured such that all sources of internally generated packets are input at max capacity to the IQE 120. All the sources of internally generated packets in the device can input their packets at max capacity to the IQE 300, which may absorb the internally generated packets at its full data rate, and stored into a respective IQE queue 310a - 310n. As previously described, the one or more IQE queues 310a - 310n may include separate queues for different types of traffic. For example, multicast replication packets and congestion packets may be stored in separate IQE queues.

Enqueued packets (on the one or more IQE queues 310a - 310n) may be read out (e.g., dequeued) at a much lower rate relative to their enqueue rate. In some embodiments, the dequeue rate may be determined based, at least in part, on the average rate of at which internally generated packets are generated (e.g., as a function of the average rate of internal packet generation). In contrast, the enqueue rate (e.g., the size of the burst absorption) may be determined by the traffic class and end-to-end analysis of these flows.

Arbitration logic 315 may be configured to determine which queues of the one or more IQE queues 310a - 310n should be dequeued. In various embodiments, different types of arbitration schemes may be used to select an IQE queue to be dequeued. For example, arbitrations schemes may include, without limitation, strict priority (e.g., based on packet characteristics or the type of queue), round robin (or weighted round robin) of the one or more IQE queues 310a - 310n, or other suitable arbitration schemes. By utilizing an IQE 300, footprint and power consumption is lower than conventional brute force approaches. Moreover, the IQE 300 has the ability to scale, with additional sources of internally generated packets able to be added, and the additional traffic (e.g., internally generated packets) able to be handled by the IQE 300.

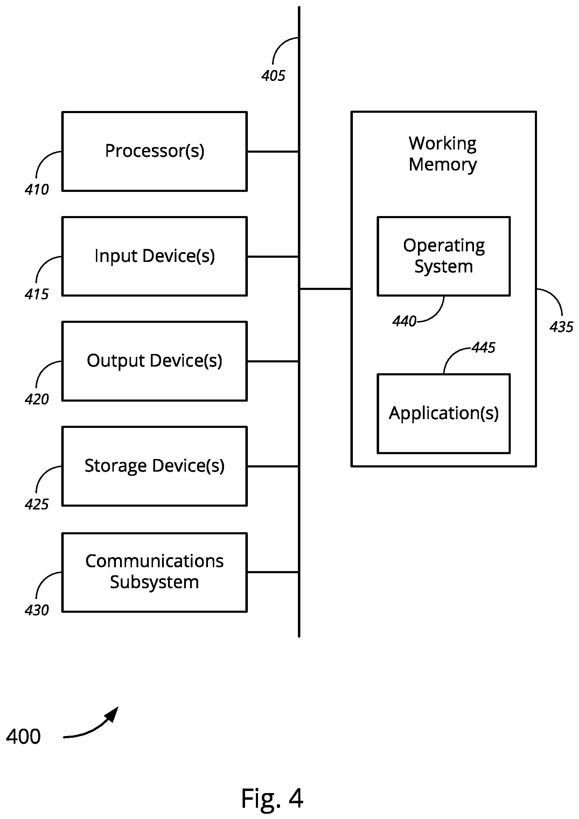

Fig. 4 provides a schematic illustration of one embodiment of a computer system 400, such as the switch 100, or subsystems thereof, such as the MMU 110, traffic manager 115, 200, and IQE 120, 205, 300, or combinations thereof, which may perform the methods provided by various other embodiments, as described herein. It should be noted that Fig. 4 only provides a generalized illustration of various components, of which one or more of each may be utilized as appropriate. Fig. 4, therefore, broadly illustrates how individual system elements may be implemented in a relatively separated or relatively more integrated manner.

The computer system 400 includes multiple hardware elements that may be electrically coupled via a bus 405 (or may otherwise be in communication, as appropriate). The hardware elements may include one or more processors 410, including, without limitation, one or more general-purpose processors and/or one or more special-purpose processors (such as microprocessors, digital signal processing chips, graphics acceleration processors, and microcontrollers); one or more input devices 415, which include, without limitation, a mouse, a keyboard, one or more sensors, and/or the like; and one or more output devices 420, which can include, without limitation, a display device, and/or the like.

The computer system 400 may further include (and/or be in communication with) one or more storage devices 425, which can comprise, without limitation, local and/or network accessible storage, and/or can include, without limitation, a disk drive, a drive array, an optical storage device, solid-state storage device such as a random-access memory ("RAM") and/or a read-only memory ("ROM"), which can be programmable, flash-updateable, and/or the like. Such storage devices may be configured to implement any appropriate data stores, including, without limitation, various file systems, database structures, and/or the like.

The computer system 400 might also include a communications subsystem 430, which may include, without limitation, a modem, a network card (wireless or wired), an IR communication device, a wireless communication device and/or chipset (such as a Bluetooth^{™} device, an 802.11 device, a WiFi device, a WiMax device, a WWAN device, a Z-Wave device, a ZigBee device, cellular communication facilities, etc.), and/or an LP wireless device as previously described. The communications subsystem 430 may permit data to be exchanged with a network (such as the network described below, to name one example), with other computer or hardware systems, between data centers or different cloud platforms, and/or with any other devices described herein. In many embodiments, the computer system 400 further comprises a working memory 435, which can include a RAM or ROM device, as described above.

The computer system 400 also may comprise software elements, shown as being currently located within the working memory 435, including an operating system 440, device drivers, executable libraries, and/or other code, such as one or more application programs 445, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general-purpose computer (or other device) to perform one or more operations in accordance with the described methods.

A set of these instructions and/or code might be encoded and/or stored on a non-transitory computer-readable storage medium, such as the storage device(s) 425 described above. In some cases, the storage medium might be incorporated within a computer system, such as the system 400. In other embodiments, the storage medium might be separate from a computer system (i.e., a removable medium, such as a compact disc, etc.), and/or provided in an installation package, such that the storage medium can be used to program, configure, and/or adapt a general purpose computer with the instructions/code stored thereon. These instructions might take the form of executable code, which is executable by the computer system 400 and/or might take the form of source and/or installable code, which, upon compilation and/or installation on the computer system 400 (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware (such as programmable logic controllers, single board computers, FPGAs, ASICs, and SoCs) might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer or hardware system (such as the computer system 400) to perform methods in accordance with various embodiments of the invention. According to a set of embodiments, some or all of the procedures of such methods are performed by the computer system 400 in response to processor 410 executing one or more sequences of one or more instructions (which might be incorporated into the operating system 440 and/or other code, such as an application program 445) contained in the working memory 435. Such instructions may be read into the working memory 435 from another computer-readable medium, such as one or more of the storage device(s) 425. Merely by way of example, execution of the sequences of instructions contained in the working memory 435 might cause the processor(s) 410 to perform one or more procedures of the methods described herein.

In an embodiment implemented using the computer system 400, various computer-readable media might be involved in providing instructions/code to processor(s) 410 for execution and/or might be used to store and/or carry such instructions/code (e.g., as signals). In many implementations, a computer-readable medium is a non-transitory, physical, and/or tangible storage medium. In some embodiments, a computer-readable medium may take many forms, including, but not limited to, non-volatile media, volatile media, or the like. Non-volatile media includes, for example, optical and/or magnetic disks, such as the storage device(s) 425. Volatile media includes, without limitation, dynamic memory, such as the working memory 435. In some alternative embodiments, a computer-readable medium may take the form of transmission media, which includes, without limitation, coaxial cables, copper wire, and fiber optics, including the wires that comprise the bus 405, as well as the various components of the communication subsystem 430 (and/or the media by which the communications subsystem 430 provides communication with other devices). In an alternative set of embodiments, transmission media can also take the form of waves (including, without limitation, radio, acoustic, and/or light waves, such as those generated during radio-wave and infra-red data communications).

Various forms of computer-readable media may be involved in carrying one or more sequences of one or more instructions to the processor(s) 410 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 400. These signals, which might be in the form of electromagnetic signals, acoustic signals, optical signals, and/or the like, are all examples of carrier waves on which instructions can be encoded, in accordance with various embodiments of the invention.

The communications subsystem 430 (and/or components thereof) generally receives the signals, and the bus 405 then might carry the signals (and/or the data, instructions, etc. carried by the signals) to the working memory 435, from which the processor(s) 410 retrieves and executes the instructions. The instructions received by the working memory 435 may optionally be stored on a storage device 425 either before or after execution by the processor(s) 410.

While some features and aspects have been described with respect to the embodiments, one skilled in the art will recognize that numerous modifications are possible. For example, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise. Consequently, although several embodiments are described above, it will be appreciated that the invention is intended to cover all modifications and equivalents within the scope of the following claims.

## Claims

1. An apparatus comprising:
one or more ingress points (IPₐ - IPₙ) configured to receive one or more first packets from one or more external sources;
one or more internal packet sources configured to generate one or more second packets;
a memory management unit (110) comprising:
an internal queueing engine coupled to the one or more internal packet sources, the internal queueing engine comprising:
one or more first queues, wherein the internal queueing engine is configured to obtain the one or more second packets from the one or more internal packet sources and enqueue each of the one or more second packets in a respective first queue of the one or more first queues;
arbitration logic (315) configured to determine an order in which the one or more second packets are dequeued from the one or more first queues based, at least in part, on an arbitration scheme; and
merge function logic (210) configured to combine the one or more second packets from the internal queueing engine with the one or more first packets.

2. The apparatus of claim 1, wherein each respective first queue of the one or more first queues is configured to store second packets of a respective traffic class, wherein enqueueing the one or more second packets comprises enqueuing the one or more second packets based, at least in part, on the respective traffic class of each second packet of the one or more second packets.

3. The apparatus of claim 2, wherein a first queue of the one or more first queues is configured to store one or more second packets of a first traffic class.

4. The apparatus of any of claims 1 to 3, wherein the respective traffic class is one of network instrumentation traffic, multicast traffic, or notification traffic.

5. The apparatus of any of claims 1 to 4, wherein the arbitration scheme includes strict priority or weighted round robin.

6. The apparatus of any of claims 1 to 5, wherein the internal queueing engine further comprises a multiplexer (305) comprising a first number of inputs, each of the first number of inputs coupled to a respective internal packet source of the one or more internal packet sources, and a second number of outputs, each output of the second number of outputs coupled to a respective first queue of the one or more first queues.

7. The apparatus of any of claims 1 to 6, wherein internal queueing engine is configured to rate limit output of the one or more second packets from the one or more first queues based, at least in part, on an amount of first packets received at the one or more ingress points (IPₐ - IPₙ).

8. A network device comprising:
one or more ingress points (IPₐ - IPₙ) configured to receive one or more external packets from one or more external sources;
one or more internal packet sources configured to generate one or more internally generated packets;
a memory management unit (110) comprising:
a traffic manager (200) configured to receive one or more external packets and the one or more internally generated packets, wherein the traffic manager (200) comprises:
an internal queueing engine coupled to the one or more internal packet sources, the internal queueing engine comprising:
one or more internal packet queues, wherein the internal queueing engine is configured to obtain the one or more internally generated packets from the one or more internal packet sources and enqueue each of the one or more internally generated packets in a respective internal packet queue of the one or more internal packet queues;
arbitration logic (315) configured to determine an order in which the one or more internally generated packets are dequeued from the one or more internal packet queues based, at least in part, on an arbitration scheme; and
merge function logic (210) configured to combine the internally generated packets from the internal queueing engine with the external packets.

9. The network device of claim 8, wherein each respective internal packet queue of the one or more internal packet queues is configured to store internally generated packets of a respective traffic class, wherein enqueueing the one or more internally generated packets comprises enqueuing the one or more internally generated packets based, at least in part, on the respective traffic class of each internally generated packets of the one or more internally generated packets.

10. The network device of claim 9, comprising at least one of the following features:
wherein a first internal packet queue of the one or more internal packet queues is configured to store internally generated packets of a first traffic class;
wherein the respective traffic class is one of network instrumentation traffic, multicast traffic, or notification traffic.

11. The network device of any of claims 8 to 10, wherein the arbitration scheme includes strict priority or weighted round robin.

12. The network device of any of claims 8 to 11, wherein internal queueing engine is configured to rate limit output of the one or more internally generated packets from the one or more internal packet queues;
in particular wherein the rate at which the internal queueing engine dequeues the one or more internally generate packets from the one or more internal packet queues is based, at least in part, on an amount of external packets received at the one or more ingress points (IPₐ - IPₙ).

13. The network device of any of claims 8 to 12, wherein the traffic manager (200) further comprises admission control logic (215) configured to determine whether to allow a respective packet of the combined one or more internally generated packets and one or more external packets output by the merge function logic (210) be placed into a packet buffer;
in particular wherein the traffic manager (200) further comprises queueing logic configured to enqueue packets from the packet buffer into a respective output queue of one or more logical queues.

14. A memory management unit (110) comprising:
a traffic manager (200) configured to receive one or more external packets and one or more internally generated packets, wherein the traffic manager (200) comprises:
an internal queueing engine coupled to one or more internal packet sources, the internal queueing engine comprising:
one or more internal packet queues, wherein the internal queueing engine is configured to obtain the one or more internally generated packets from the one or more internal packet sources and enqueue each of the one or more internally generated packets in a respective internal packet queue of the one or more internal packet queues;
arbitration logic (315) configured to determine an order in which the one or more internally generated packets are dequeued from the one or more internal packet queues based, at least in part, on an arbitration scheme; and
merge function logic (210) configured to combine the internally generated packets from the internal queueing engine with the external packets received from the one or more external source.

15. The memory management unit (110) of claim 14, comprising at least one of the following features:
wherein each respective internal packet queue of the one or more internal packet queues is configured to store internally generated packets of a respective traffic class, wherein enqueueing the one or more internally generated packets comprises enqueuing the one or more internally generated packets based, at least in part, on the respective traffic class of each internally generated packets of the one or more internally generated packets;
wherein the arbitration scheme includes strict priority or weighted round robin;
wherein internal queueing engine is configured to rate limit output of the one or more internally generated packets from the one or more internal packet queues, wherein the rate at which the internal queueing engine dequeues the one or more internally generate packets from the one or more internal packet queues is based, at least in part, on an amount of external packets received at the one or more ingress points (IPₐ - IPₙ).
